(19) Europäisches Patentamt
European Patent Office
Office européen des brevets

(11) **EP 2 315 335 A2**

(12) **EUROPEAN PATENT APPLICATION**

(43) Date of publication:
    **27.04.2011 Bulletin 2011/17**

(51) Int Cl.:
    ***H02J 7/00*** (2006.01)

(21) Application number: **10164449.0**

(22) Date of filing: **31.05.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO SE SI SK SM TR**<br>Designated Extension States:<br>**BA ME RS** | (71) Applicant: **LG Electronics**<br>**Seoul,**<br>**150-721 (KR)** |
| | (72) Inventor: **Chang, Seockjun**<br>**Seoul (KR)** |
| (30) Priority: **22.10.2009 KR 20090100881** | (74) Representative: **Cabinet Plasseraud et al**<br>**52, rue de la Victoire**<br>**75440 Paris Cedex 09 (FR)** |

(54) **Mobile terminal and charge current setting method thereof**

(57) Disclosed are a mobile terminal capable of effectively discriminating a mobile terminal charger so as to set an appropriate charge current, and a method for charging a charge current thereof. To this end, when a charger (e.g., Travel Adaptor (TA)) is inserted via a cable (50), a short-circuited state of a data pin of the charger is checked such that a route is switched to form a closed loop defined by data pins and provided with predetermined power when the data pin of the charger (TA) is in the short-circuited state, and the voltage applied to the formed closed loop is compared with a predetermined reference value, thereby determining a type of the charger. Therefore, when various types of chargers are inserted in the mobile terminal via a cable (50), the corresponding type of charger is determined so as to set an appropriate charge current, resulting in ensuring a fast charging operation and minimizing damage on the charger.

FIG. 7

**Description**

BACKGROUND OF THE INVENTION

The present invention relates to charging of a mobile terminal, and particularly, to a mobile terminal

Mobile terminals may be configured to perform various functions, for example, data and voice communication, capturing images or video, storing voice, reproducing music files via a speaker system, displaying images or video and the like. Some of mobile terminals may include an additional function of playing games, and other mobile terminals may be implemented as multimedia players. In addition, in recent time, mobile terminals can receive broadcast or multicast signals to allow viewing of video or television programs.

Furthermore, many efforts are undergoing to support or enhance various functions of such mobile terminals. Such many efforts include not only changes and improvement of structural components implementing a mobile terminal but also software or hardware improvement.

Among others, a touch function of the mobile terminal is designed for a user unfamiliar to button/key input using a touch screen to conveniently execute operations of the mobile terminal. In recent time, the touch function is becoming an important function of the terminal together with a user interface (UI), in addition to a simple input function. Hence, as the touch function is applied to the mobile terminal in more various manners, development of appropriate user interfaces is further demanded.

Various battery chargers are used for mobile terminals. Among others, Travel Adaptor (TA) is a charger for charting a mobile terminal at 700mA through a USB cable, and includes a header (TA header).

However, the recent tendency to use smart phones increases the battery capacity. Accordingly, when a mobile terminal having an increased battery capacity is charged by use of the TA, charge time disadvantageously increases as long as the increased battery capacity. To overcome such disadvantage (i.e., to reduce the charge time), manufacturers are developing TA using 1A. In this case, distinguishing TA using 1A from TA using 700mA rises as an important problem.

In general, pins of a receptacle of a mobile terminal includes Vbus, D-, D+, ID and ground, thus having a relatively uniform resistance. However, TA corresponding to an accessory may have a different resistance depending on a type. That is, TA using 1A and TA using 700mA have different resistances. So, the ID pin is connected to ADC to measure resistance, thereby distinguishing TA using 1 A and TA using 700mA from each other. However, TA is configured such that TA head and USB cable are inserted in a mobile terminal. Here, since the ID pin is included in the USB cable other than TA, if TA header is switched, there is no way to identify the TA head.

Consequently, if a mobile terminal, which is charged with 1A, uses the existing TA using 700mA, since the mobile terminal tries to maintain its charge current at 1 A, an overload occurs at TA, which causes an over current protection at TA, resulting in damage on TA.

SUMMARY OF THE INVENTION

Therefore, an object of the present invention is to provide a mobile terminal, capable of setting an accurate charge current by discriminating a type of charger, and a charge current setting method thereof.

Another object of the present invention is to provide a mobile terminal, capable of effectively discriminating a type of charger, and a charge current setting method thereof.

Another object of the present invention is to provide a mobile terminal, capable of preventing mis-operation of the mobile terminal during charging by discriminating a type of charger, and a charge current setting method thereof.

To achieve these and other advantages and in accordance with the purpose of the present invention, as embodied and broadly described herein, there is provided a mobile terminal including a receptacle configured to insert a charger therein, and a controller configured to discriminate a type of an inserted charger when the corresponding charger is inserted in the receptacle via a cable, and set a charge current according to the discriminated type of the charger.

The charger may be a Universal Serial Bus (USB) based charger, and the cable may be a USB cable.

The controller may be configured to measure a voltage of a route defined by the receptacle and data pins of the charger, when the charger is inserted, so as to determine the type of charger.

The controller may set the charge current to 600mA if the charger is a 700mA type charger, and set the charge current to 900mA if the charger is a 1 A type charger. Also, the controller may set the charge current to 400mA if a data pin of the charger is in an open state.

In accordance with one embodiment of the present invention to achieve the objects, there is provided a mobile terminal including a receptacle configured to insert a charger therein, a controller configured to form a route defined by data pins of the receptacle and the charger when the charger is inserted in the receptacle via a cable, and determine a type of the charger based upon the route voltage, and a switching unit configured to switch a connection between the data pins of the controller and the receptacle so as to form the route in response to a select signal of the controller.

The charger may be a Universal Serial Bus (USB)-based Travel Adaptor (TA) and the cable may be a USB cable.

The route may be defined in form of a closed loop if the data pin of the charger is in a short-circuited state, while each of data pin may be connected to remain in an open state if the data pin of the charger is not in the short-circuited state.

The controller may check resistance of an ID pin of the cable to confirm whether the cable inserted in the receptacle is authenticated.

The controller may compare a voltage applied to the closed loop with a predetermined voltage value to determine a type of charger.

The controller may set a charge current according to the determined type of the charger.

Preferably, the controller may set the charge current to 600mA if the charger is a 700mA type charger and set the charge current to 900mA if the charger is a 1A type charger. Also, the controller may set the charge current to 400mA if the data pin of the charger is in an open state.

The switching unit may include a first switch configured to switch a first data pin of the receptacle to a power source terminal or a first data pin of the controller in response to a select signal of the controller; and a second switch configured to switch a second data pin of the receptacle to a second data pin of the controller or a voltage measure pin in response to the select signal.

Preferably, the first switch may connect a first data pin of the receptacle to a power source terminal and the second switch may connect a second data pin of the receptacle to a voltage measure pin when the data pin of the charger is in a short-circuited state.

In accordance with one embodiment of the present invention to achieve the objects, there is provided a method for setting a charge current of a mobile terminal including detecting an insertion of a charger via a cable, measuring a voltage of a route defined by a data pin of the mobile terminal and a data pin of the charger so as to determine a type of the inserted charger, and setting a charge current according to the determined type of charger.

The determining of the type of charger may include checking a short-circuited state of the data pin of the charger, forming a route defined by a receptacle of a controller and the data pin of the charger if the data pin of the charger is in the short-circuited state, measuring a voltage of the formed route, and comparing the measured voltage with a predetermined reference value to determine the type of the charger.

Preferably, the charger may be a Universal Serial Bus (USB) based Travel Adaptor (TA), and the cable may be a USB cable.

The method may further include checking resistance of an ID pin of the cable to confirm whether the cable inserted in the receptacle is authenticated.

The charge current may be set to 600mA if the charger is a 700mA type charger, and 900mA if the charger is a 1A type charger. Also, the charge current may be set to 400mA if the data pin of the charger is in an open state.

The route may be defined in form of a closed loop if the data pin of the charger is in a short-circuited state and defined in an open form if not in the short-circuited state.

The foregoing and other objects, features, aspects and advantages of the present invention will become more apparent from the following detailed description of the present invention when taken in conjunction with the accompanying drawings.

BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

FIG. 1 is a block diagram of a mobile terminal in accordance with one embodiment of the present invention;

FIG. 2 is a front perspective view of the mobile terminal in accordance with the one embodiment of the present invention;

FIG. 3 is a rear perspective view of the mobile terminal in accordance with the one embodiment of the present invention;

FIG. 4 is a block diagram of a wireless communication system operable with the mobile terminal in accordance with the one embodiment of the present invention;

FIG. 5 is a view illustrating a charge structure of a mobile terminal using a typical USB-based charger;

FIG. 6 is a detailed view of the charge structure of the mobile terminal shown in FIG. 5;

FIG. 7 is a view illustrating a charge structure for determining a USB-based charger in accordance with an embodiment of the present invention;

FIG. 8 is a view illustrating a structure of the mobile terminal before insertion of the USB-based charger;

FIG. 9 is a view illustrating a charging operation in case where an external device is connected to the mobile terminal via a USB cable;

FIG. 10 is a view illustrating a charging operation in case where a USB-based charger is inserted in the mobile terminal via a USB cable;

FIG. 11 is a view illustrating a charging operation in case where a USB-based charger is inserted in the mobile terminal via a USB cable; and

FIG. 12 is a flowchart illustrating a charge current setting method in a mobile terminal in accordance with an embodiment of the present invention.

DETAILED DESCRIPTION OF THE INVENTION

Description will now be given in detail of preferred configurations of mobile terminals according to the present invention, with reference to the accompanying drawings. Hereinafter, suffixes "module" and "unit or portion" for components used herein in description are merely provided only for facilitation of preparing this specification, and thus they are not granted a specific meaning or function. Hence, it should be noticed that "module" and "unit or portion" can be used together.

Mobile terminals may be implemented using a variety of different types of terminals. Examples of such terminals include mobile terminals, such as mobile phones, smart phones, notebook computers, digital broadcast terminals, Personal Digital Assistants (PDA), Portable Multimedia Players (PMP), navigators and the like, and stationary terminals, such as digital TVs, desktop computers and the like. The following description assumes that the terminal is a mobile terminal. However, it can be easily understood by those skilled in the art that the configuration according to the following description can be applied to the stationary terminals except for components particularly provided for mobility.

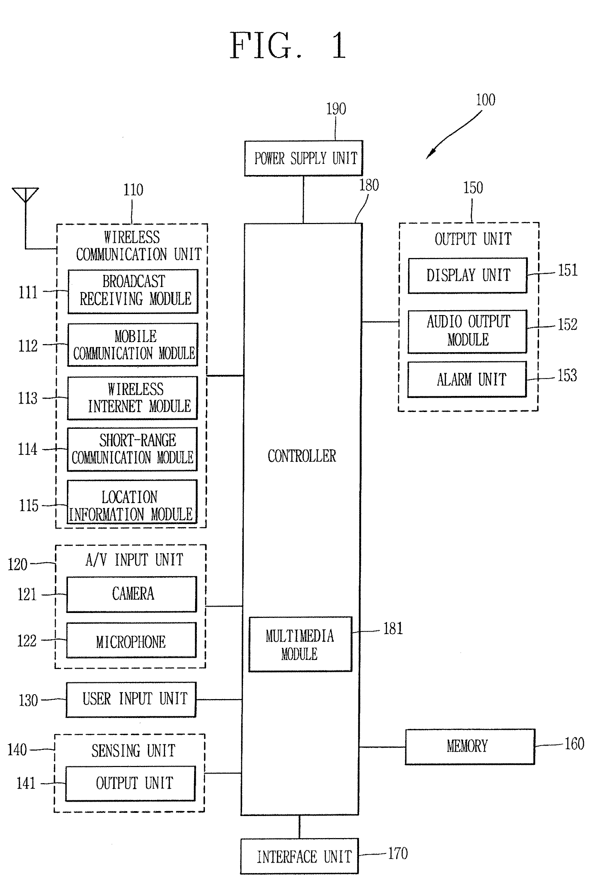

FIG. 1 is a block diagram of a mobile terminal in accordance with one embodiment of the present invention.

The mobile terminal 100 may comprise components, such as a wireless communication unit 110, an AudioNideo (AN) input unit 120, a user input unit 130, a sensing unit 140, an output unit 150, a memory 160, an interface unit 170, a controller 180, a power supply 190 and the like. FIG. 1 shows the mobile terminal 100 having various components, but it is understood that implementing all of the illustrated components is not a requirement. Greater or fewer components may alternatively be implemented.

Hereinafter, each component is described in sequence.

The wireless communication unit 110 may typically include one or more components which permit wireless communications between the mobile terminal 100 and a wireless communication system or between the mobile terminal 100 and a network within which the mobile terminal 100 is located. For example, the wireless communication unit 110 may include a broadcast receiving module 111, a mobile communication module 112, a wireless internet module 113, a short-range communication module 114, a position location module 115 and the like.

The broadcast receiving module 111 receives a broadcast signal and/or broadcast associated information from an external broadcast managing entity via a broadcast channel. The broadcast channel may include a satellite channel and a terrestrial channel. The broadcast managing entity may indicate a server which generates and transmits a broadcast signal and/or broadcast associated information or a server which receives a pre-generated broadcast signal and/or broadcast associated information and sends them to the mobile terminal. Examples of broadcast associated information may include information associated with a broadcast channel, a broadcast program, a broadcast service provider, and the like. The broadcast signal may be implemented as a TV broadcast signal, a radio broadcast signal, and a data broadcast signal, among others. The broadcast signal may further include a data broadcast signal combined with a TV or radio broadcast signal.

The broadcast associated information may be provided via a mobile communication network, and received by the mobile communication module 112.

The broadcast associated information may be implemented in various formats. For instance, broadcast associated information may include Electronic Program Guide (EPG) of Digital Multimedia Broadcasting (DMB), Electronic Service Guide (ESG) of Digital Video Broadcast-Handheld (DVB-H), and the like.

The broadcast receiving module 111 may be configured to receive digital broadcast signals transmitted from various types of broadcast systems. Such broadcast systems may include Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T), and the like. The broadcast receiving module 111 may be configured to be suitable for every broadcast system transmitting broadcast signals as well as the digital broadcasting systems.

Broadcast signals and/or broadcast associated information received via the broadcast receiving module 111 may be stored in a suitable device, such as a memory 160.

The mobile communication module 112 transmits/receives wireless signals to/from at least one of network entities (e.g., base station, an external mobile terminal, a server, etc.) on a mobile communication network. Here, the wireless signals may include audio call signal, video call signal, or various formats of data according to transmission/reception of text/multimedia messages.

The wireless internet module 113 supports wireless Internet access for the mobile terminal. This module may be internally or externally coupled to the mobile terminal. Examples of such wireless Internet access may include Wireless LAN (WLAN) (Wi-Fi), Wireless Broadband (Wibro), World Interoperability for Microwave Access (Wimax), High Speed Downlink Packet Access (HSDPA), and the like.

The short-range communication module 114 denotes a module for short-range communications. Suitable technologies for implementing this module may include BLUETOOTH, Radio Frequency IDentification (RFID), Infrared Data Association (IrDA), Ultra-WideBand (UWB), ZigBee, and the like.

The position location module 115 denotes a module for detecting or calculating a position of a mobile terminal. An example of the position location module 115 may include a Global Position System (GPS) module. Under the current technique, the GPS module can measure accurate time and distance respectively from more than three satellites so as to accurately calculate a current position of the mobile terminal based on such three different distances according to a triangulation scheme. A scheme may be used to obtain time information and distance information from three satellites and correct error by one satellite. Also, the GPS module may continuously calculate a current position in real time so as to obtain speed information.

The A/V input unit 120 is configured to provide audio or video signal input to the mobile terminal. The AN input unit 120 may include a camera 121 and a microphone 122. The camera 121 receives and processes image frames of still pictures or video obtained by image sensors in a video call mode or a capturing mode. The processed image frames may be displayed on a display 151.

The image frames processed by the camera 121 may be stored in the memory 160 or transmitted to the exterior via the wireless communication unit 110. Two or more cameras 121 may be provided according to the configuration of the mobile terminal.

The microphone 122 may receive an external audio signal via a microphone while the mobile terminal is in a particular mode, such as a phone call mode, a recording mode, a voice recognition mode, or the like. This audio signal is processed into digital data. The processed digital data is converted for output into a format transmittable to a mobile communication base station via the mobile communication module 112 in case of the phone call mode. The microphone 122 may include assorted noise removing algorithms to remove noise generated in the course of receiving the external audio signal.

The user input unit 130 may generate input data inputted by a user to control the operation of the mobile terminal. The user input unit 130 may include a keypad, a dome switch, a touchpad (e.g., static pressure/capacitance), a jog wheel, a jog switch and the like. A specific example can be one in which the touchpad is layered with the display 151 to be explained later so as to be in cooperation with the display 151, which is referred to as a touch screen.

The sensing unit 140 provides status measurements of various aspects of the mobile terminal. For instance, the sensing unit 140 may detect an open/close status of the mobile terminal, a change in a location of the mobile terminal 100, a presence or absence of user contact with the mobile terminal 100, the location of the mobile terminal 100, acceleration/deceleration of the mobile terminal 100, and the like, so as to generate a sensing signal for controlling the operation of the mobile terminal 100. For example, regarding a slide-type mobile terminal, the sensing unit 140 may sense whether a sliding portion of the mobile terminal is open or closed. Other examples include sensing functions, such as the sensing unit 140 sensing the presence or absence of power provided by the power supply 190, the presence or absence of a coupling or other connection between the interface unit 170 and an external device, and the like. Here, the sensing unit 140 may include a proximity sensor 141, which will be described later in relation to a touch screen.

The interface unit 170 is generally implemented to couple the mobile terminal to external devices. The interface unit 170 may include, for example, wired/wireless headset ports, external charger ports, wired/wireless data ports, memory card ports, ports for coupling devices having an identification module, etc.), audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), a Universal Subscriber Identity Module (USIM), and the like. Also, the device having the identification module (hereinafter, referred to as 'identification device') may be implemented in a type of smart card. Hence, the identification device can be coupled to the mobile terminal 100 via a port. Such interface unit 170 may receive data from an external device, or provided with power and accordingly transfer the received data or power to each component within the mobile terminal 100 or transfer data of the mobile terminal 100 to an external device.

Also, the interface unit 170 may serve as a path for power to be supplied from an external cradle to the mobile terminal 100 when the mobile terminal 100 is connected to the external cradle or as a path for transferring various command signals inputted from the cradle by a user to the mobile terminal 100. Such various command signals or power inputted from the cradle may operate as signals for recognizing that the mobile terminal 100 has accurately been mounted to the cradle.

The output unit 150 is configured to output an audio signal, a video signal or an alarm signal. The output unit 150 may include a display 151, an audio output module 152, an alarm 153, and the like.

The display 151 may output information processed in the mobile terminal 100. For example, when the mobile terminal is operating in a phone call mode, the display 151 will provide a User Interface (UI) or a Graphic User Interface (GUI) which includes information associated with the call. As another example, if the mobile terminal is in a video call mode or a capturing mode, the display 151 may additionally or alternatively display images captured and/or received, UI, or GUI.

Meanwhile, as mentioned above, a touch screen can be configured as the display 151 and the touchpad are layered with each other to work in cooperation with each other. This configuration permits the display 151 to function both as an input device and an output device. The display 151 may be implemented using, for example, a Liquid Crystal Display (LCD), a Thin Film Transistor-Liquid Crystal Display (TFT-LCD), an Organic Light-Emitting Diode (OLED), a flexible display, a three-dimensional (3D) display, or the like. Some of the displays can be configured to be transparent such that it is possible to see the exterior therethrough. These displays may be called transparent displays. A representative example of the transparent display may include a Transparent Organic Light Emitting Diode (TOLED), and the like. The mobile terminal 100 may include two or more of such displays 151 according to its embodiment. For example, the mobile terminal 100 may simultaneously include an external display (not shown) and an internal display (not shown). The touch screen may be configured so as to detect a touch input pressure as well as touch input position and touch input area.

The audio output module 152 may output audio data which is received from the wireless communication unit 110 in various modes including call-receiving mode, call-placing mode, recording mode, voice recognition mode, broadcast reception mode, and the like, or audio data stored in the memory 160. Also, the audio output module 152 may output an audio signal relating to a particular function (e.g., call received, message received, etc.) performed in the mobile terminal 100. The audio output module 152 may be implemented using a speaker, a buzzer, or the like.

The alarm 153 may output a signal to inform a generation of event associated with the mobile terminal 100. Typical events may include call received, message received, user input received and the like. In addition to generating the audio or video signal, the alarm 153 may also inform the event generation in different manners, for example, by providing tactile sensations (e.g., vibration) to a user. The alarm 153 may also be configured to vibrate responsive to the mobile terminal receiving a call or message. As another example, vibration is provided by the alarm 153 responsive to receiving user input at the mobile terminal, thus providing a tactile feedback mechanism. Such vibration can also be provided to make a user recognize the event generation. The signal informing the event generation may be outputted via the display 151 or the audio output module 152.

The memory 160 may store a program for the processing and control of the controller 180. Alternatively, the memory 160 may temporarily store input/output data (e.g., phonebook data, messages, still images, video and the like). Also, the memory 160 may store data related to various patterns of vibrations and audio outputted upon the touch input on the touch screen.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-Only Memory (EEPROM), Programmable Read-Only Memory (PROM), magnetic memory, magnetic disk, optical disk, and the like. Also, the mobile terminal 100 may operate a web storage which performs the storage function of the memory 160 on the Internet.

The controller 180 typically controls the overall operations of the mobile terminal. For example, the controller 180 performs the control and processing associated with voice calls, data communications, video calls, and the like. The controller 180 may include a multimedia module 181 which provides multimedia playback. The multimedia module 181 may be configured as part of the controller 180 or as a separate component.

The controller 180 can perform a pattern recognition processing so as to recognize writing or drawing input on the touch screen as text or image.

The power supply 190 provides power required by various components under the control of the controller 180. The provided power may be internal power, external power, or combination thereof.

Various embodiments described herein may be implemented in a computer-readable medium using, for example, software, hardware, or some combination thereof.

For a hardware implementation, the embodiments described herein may be implemented within one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, other electronic units designed to perform the functions described herein, or a selective combination thereof. In some cases, such embodiments are implemented by the controller 180.

For software implementation, the embodiments such as procedures and functions may be implemented together with separate software modules each of which performs at least one of functions and operations. The software codes can be implemented with a software application written in any suitable programming language. Also, the software codes may be stored in the memory 160 and executed by the controller 180.

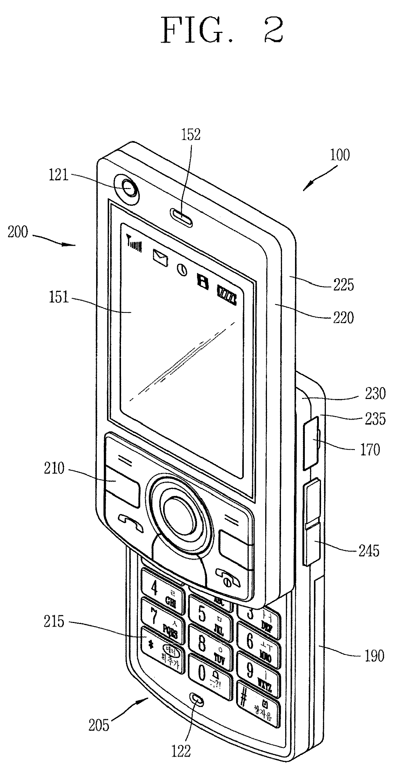

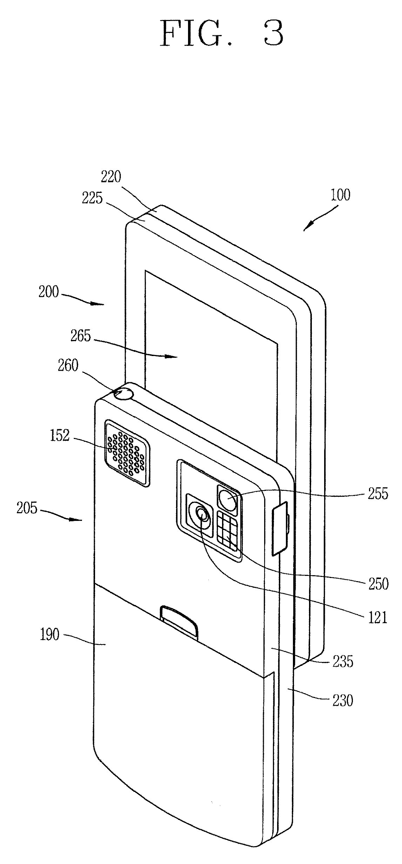

As mentioned above, the internal components of the mobile terminal related to the present invention have been described from the perspective of their functions. Hereinafter, external components of the mobile terminal related to the present invention will be described from the perspective of their functions with reference to FIGS. 2 and 3. The mobile terminal may be implemented in a variety of different configurations. Examples of such configurations include folder type, slide type, bar type, rotating type, swing type or the like. For the sake of brief explanation, further disclosure will primarily relate to a slide-type mobile terminal. However, the present invention may not be limited to the slide-type mobile terminal, but can be applied to other types of terminals including the aforesaid types of terminals.

FIG. 2 is a front perspective view of a mobile terminal in accordance with one embodiment of the present invention.

The mobile terminal 100 of the present invention may comprise a first body 200, and a second body 205 configured to slidably cooperate with the first body 200 in at least one direction. For a folder-type mobile terminal, the mobile terminal 100 may include a first body, and a second body configured to have at least one side folded or unfolded with respect to the first body 200.

The first body 200 is positioned over the second body 205 in a manner that the second body 205 is obscured by the first body 200. This state can be referred to as a closed configuration (position). As illustrated in FIG. 2, the state where the first body 200 exposes at least part of the second body 205 can be referred to as an open configuration (position).

In the meantime, the mobile terminal according to the present invention, although not shown in the drawing, may be a folder-type mobile terminal including a first body and a second body having one side folded or unfolded with respect to the first body. Here, the folded state of the second body can be referred to as the closed configuration, whereas the unfolded state of the second body can be referred to as the open configuration.

In addition, the mobile terminal according to the present invention, although not shown in the drawing, may be a swing-type mobile terminal including a first body and a second body capable of being swung with respect to the first body. Here, the state that the first body is overlapped with the second body can be referred to as the closed configuration whereas the state that the second body is swung thus to make the first body partially exposed can be referred to as the open configuration.

Even if any separate description is not given of the folder-type mobile terminal and the swing-type mobile terminal, it can be easily understood by those skilled in the art and thus a detailed description thereof will not be repeated.

The mobile terminal 100 may be operable in a standby (idle) mode when in the closed configuration, but this mode can be released by the user's manipulation. Also, the mobile terminal 100 may typically be operable in an active (phone call) mode in the open configuration. Here, this mode may be changed into the idle mode according to the user's manipulation or after a certain time elapses.

A case (housing, casing, cover, etc.) forming the outside of the first body 200 is formed by a first front case 220 and a first rear case 225. Various electronic components may be disposed in a space between the first front case 220 and the first rear case 225. One or more intermediate cases may additionally be disposed between the first front case 220 and the first rear case 225.

The cases can be formed of resin in a manner of injection molding, or formed using metallic materials such as stainless steel (STS) and titanium (Ti).

A display 151, an audio output module 152, a camera 121 or a first user input unit 210 may be disposed at the first front case 220 of the first body 200.

The display 151 has been described in connection with FIG. 1, so its detailed description will not be repeated for the sake of brief explanation.

The audio output module 152 may be implemented as a speaker.

The camera 121 may be implemented to be suitable for a user to capture still images or video.

Like the first body 200, a case configuring the outside of the second body 205 may be formed by a second front case 230 and a second rear case 235.

The second user input unit 215 may be disposed at the second body 205, in detail, at a front face of the second front case 230.

A third user input unit 245, a microphone 122 and an interface unit 170 may be disposed either at the second front case 230 or at the second rear case 235.

The first to third user input units 210, 215 and 245 may be named as a user input unit 130. Any tactile manner that a user can touch, e.g., the display 151, for manipulation can be employed for the user input unit 130.

For example, the user input unit 130 can be implemented as a dome switch or touchpad which a user can input information in a pushing or touching manner, or implemented in a manner of using a wheel, a jog or a joystick to rotate keys.

Regarding each function, the first user input unit 210 is used for inputting commands such as START, END, SCROLL or the like, and the second user input unit 215 is used for inputting numbers, characters, symbols, or the like. The first user input unit 210 may include so-called soft keys used in cooperation with icons displayed on the display 151, and navigation keys (usually composed of four navigation keys and a center key) for indicating and confirming an orientation.

Also, the third user input unit 245 can be operated as a hot key for activating a specific function within the mobile terminal.

The microphone 122 may be implemented to be suitable for receiving user's voice or various sounds.

The interface unit 170 may be used as a passage through which the terminal related to the present invention can exchange data or the like with an external device. The interface unit 170 has been described in connection with FIG. 1, so its detailed description will be omitted.

The power supply 190 may be disposed at a side of the second rear case 235 to provide power to the mobile terminal.

The power supply 190 may be a rechargeable battery, for example, to be attachable/detachable for charging.

FIG. 3 is a rear perspective view of the mobile terminal of FIG. 2.

As shown in FIG. 3, a camera 121 may further be disposed at a rear face of the second rear case 235 of the second body 205. The camera 121 of the second body 205 faces a direction which is opposite to a direction faced by the camera 121 of the first body 200, and may have different pixels from those of the camera 121 of the first body 200.

For example, the camera 121 of the first body 200 may operate with relatively lower pixels (lower resolution). Thus, the camera 121 of the first body 200 may be useful when a user can capture his face and send it to another party during a video call or the like. On the other hand, the camera 121 of the second body 205 may operate with a relatively higher pixels (higher resolution) such that it can be useful for a user to obtain higher quality pictures for later use.

A flash 250 and a mirror 255 may additionally be disposed adjacent to the camera 121 of the second body 205. The flash 250 operates in conjunction with the camera 121 of the second body 250 when taking a picture using the camera 121 of the second body 205. The mirror 255 can cooperate with the camera 121 of the second body 205 to allow a user to photograph himself in a self-portrait mode.

The second rear case 235 may further include an audio output module 152.

The audio output module 152 of the second body 205 can cooperate with the audio output module 152 of the first body 200 to provide stereo output. Also, the audio output module 152 may be configured to operate as a speakerphone.

A broadcast signal receiving antenna 260 may be disposed at one side of the second rear case 235, in addition to an antenna for communications. The antenna 260 can be configured to retract into the second body 205.

One part of a slide module 265 which allows the first body 200 to be slidably coupled to the second body 205 may be disposed at the first rear case 225 of the first body 200.

The other part of the slide module 265 may be disposed at the second front case 230 of the second body 205, such that it may not be exposed to the exterior as illustrated in the drawing of the present invention.

As such, it has been described that the camera 121 is disposed at the second body 205; however, the present invention may not be limited to the configuration.

For example, it is also possible that one or more of those components (e.g., 260, 121~250, 152, etc.), which have been described to be implemented on the second rear case 235, such as the camera 121, will be implemented on the first body 200, particularly, on the first rear case 225. In this configuration, the component(s) disposed on the first rear case 225 can be protected by the second body 205 in a closed position of the mobile terminal. In addition, without the camera 121 of the second body 205, the camera 121 of the first body 200 can be implemented to be rotatable so as to rotate up to a direction which the camera 121 of the second body 205 faces.

The mobile terminal 100 of FIGS. 1 to 3 may be configured to operate within a communication system which transmits data via frames or packets, including both wireless and wireline communication systems, and satellite-based communication systems.

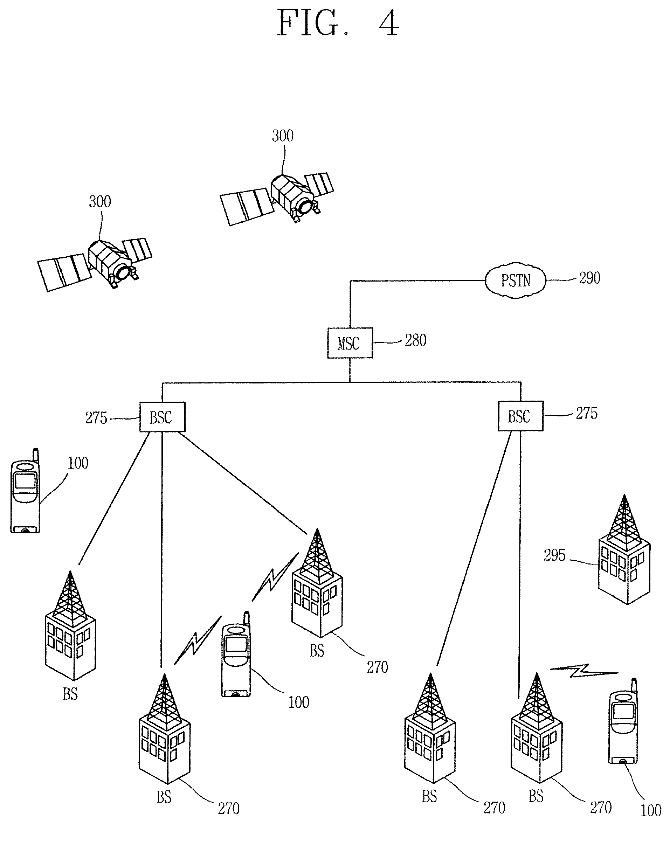

Hereinafter, a communication system within which the mobile terminal related to the present invention can operate will be described with reference to FIG. 4.

Such communication systems utilize different air interfaces and/or physical layers. Examples of such air interfaces utilized by the communication systems include Frequency Division Multiple Access (FDMA), Time Division Multiple Access (TDMA), Code Division Multiple Access (CDMA), and Universal Mobile Telecommunications System (UMTS), the Long Term Evolution (LTE) of the UMTS, the Global System for Mobile Communications (GSM), and the like. By way of non-limiting example only, further description will relate to a CDMA communication system, but such teachings apply equally to other system types including the CDMA wireless communication system.

Referring now to FIG. 4, a CDMA wireless communication system is shown having a plurality of mobile terminals 100, a plurality of base stations (BSs) 270, base station controllers (BSCs) 275, and a mobile switching center (MSC) 280. The MSC 280 is configured to interface with a conventional Public Switch Telephone Network (PSTN) 290. The MSC 280 is also configured to interface with the BSCs 275. The BSCs 275 are coupled to the base stations 270 via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs 275 can be included in the system as shown in FIG. 4.

Each base station 270 may include one or more sectors, each sector having an omnidirectional antenna or an antenna pointed in a particular direction radially away from the base station 270. Alternatively, each sector may include two or more different antennas. Each base station 270 may be configured to support a plurality of frequency assignments, with each frequency assignment having a particular spectrum (e.g., 1.25 MHz, 5 MHz, etc.).

The intersection of sector and frequency assignment may be referred to as a CDMA channel. The base stations 270 may also be referred to as Base Station Transceiver Subsystems (BTSs). In some cases, the term "base station" may be used to refer collectively to a BSC 275, and one or more base stations 270. The base stations may also be denoted as "cell sites." Alternatively, individual sectors of a given base station 270 may be referred to as cell sites.

A broadcasting transmitter (BT) 295, as shown in FIG. 4, transmits a broadcast signal to the mobile terminals 100 operating within the system. The broadcast receiving module 111 (FIG. 1) is typically configured inside the mobile terminal 100 to receive broadcast signals transmitted by the BT 295.

FIG. 4 further depicts several Global Positioning System (GPS) satellites 300. Such satellites 300 facilitate locating the position of at least one of plural mobile terminals 100. Two satellites are depicted in FIG. 4, but it is understood that useful position information may be obtained with greater or fewer satellites than two satellites. The GPS module 115 (FIG. 1) is typically configured to cooperate with the satellites 300 to obtain desired position information. It is to be appreciated that other types of position detection technology, (i.e., location technology that may be used in addition to or instead of GPS location technology) may alternatively be implemented. If desired, at least one of the GPS satellites 300 may alternatively or additionally be configured to provide satellite DMB transmissions.

During typical operation of the wireless communication system, the base stations 270 receive sets of reverse-link signals from various mobile terminals 100. The mobile terminals 100 are engaging in calls, messaging, and executing other communications. Each reverse-link signal received by a given base station 270 is processed within that base station 270. The resulting data is forwarded to an associated BSC 275. The BSC 275 provides call resource allocation and mobility management functionality including the orchestration of soft handoffs between base stations 270. The BSCs 275 also route the received data to the MSC 280, which then provides additional routing services for interfacing with the PSTN 290. Similarly, the PSTN 290 interfaces with the MSC 280, and the MSC 280 interfaces with the BSCs 275, which in turn control the base stations 270 to transmit sets of forward-link signals to the mobile terminals 100.

Travel Adaptor (TA) as a charger used for a mobile terminal may include two accessories, namely, TA header and USB cable and charge the mobile terminal at 700mA. The TA is a wireless charger without a cable, so the USB cable should be prepared to charge the mobile terminal using the TA.

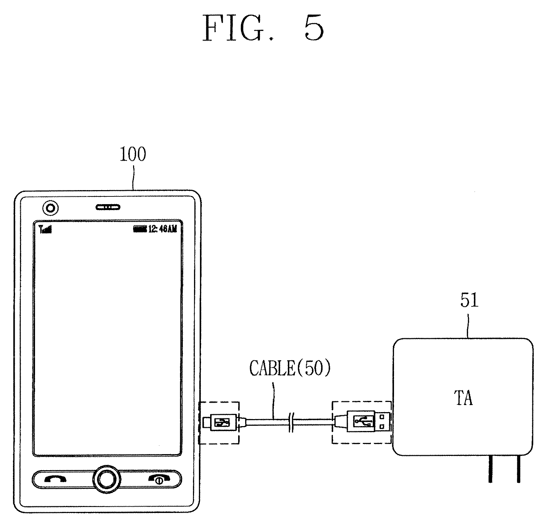

FIG. 5 illustrates a structure of charging the mobile terminal using a typical TA.

As shown in FIG. 5, a mobile terminal 100 may be connected to a charger, namely, a TA 51 (or TA head), via a cable 50, so as to be charged with charge power (or charge current) supplied from the TA 51 via the cable 50. The cable 50 may be implemented as a USB cable. Here, the TA 51 may be either 1A type TA or 700mA type TA, so it is highly important to discriminate the type of TA and set an appropriate charge current therefor.

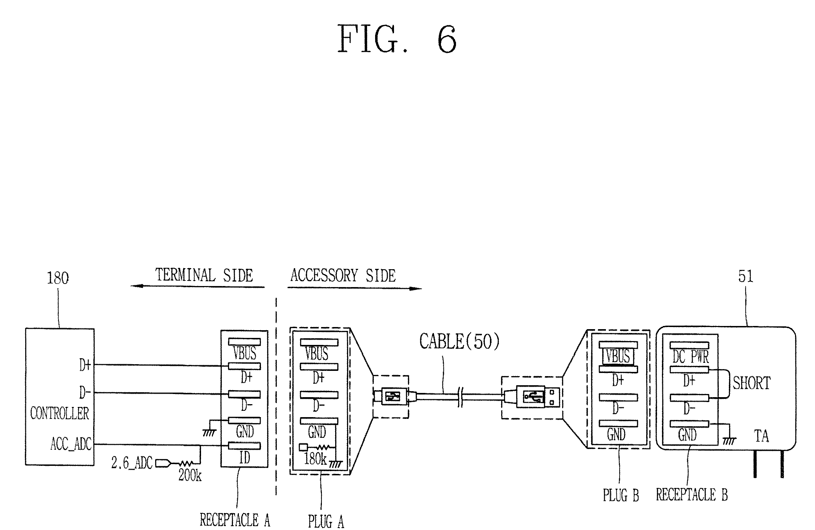

FIG. 6 is a detailed view of the charge structure shown in FIG. 5.

As shown in FIG. 6, a receptacle A of the mobile terminal 100 may include several pins, including Vbus, D-, D+, ID and ground. The mobile terminal 100 may be connected to the TA 51 (or TA head) via the cable 50, which has plugs A and B attached to both ends thereof. Here, the plug A of the cable 50 is connected to the receptacle A of the mobile terminal 100 and the plug B is connected to the receptacle B of the TA 51. The plug A may include Vbus, D-, D+, ID and ground pins corresponding to those of the receptacle A. Also, the plug B may include Vbus, D-, D+, ID and ground pins. Also, a receptacle B may include pins corresponding to Vbus, D-, D+, ID and ground pins of the plug B.

Especially, the ID pin of the receptacle A of the mobile terminal 100 may be connected to ADC pin (ACC_ADC) (or terminal) of the controller 180, and the ID pin of the plug A may be connected to 180kΩ resistance. Also, the data pins, namely, D+ and D-, of the receptacle B of the TA 51 are in a short-circuited state.

Accordingly, the charging of the mobile terminal may be realized by virtue of insertion of the cable-TA head structure into the mobile terminal.

Hereinafter, description will be given of a method for distinguishing a USB-based charger (hereinafter, simply referred to as 'charger') in the aforesaid charge structure.

As shown in FIG. 6, when the TA 51 is inserted into the receptacle A of the mobile terminal via the cable 50, the plug A of the cable 50 is coupled to the ID pin of the receptacle A of the mobile terminal. Here, since the ID pin of the plug A is connected to the 180 kΩ resistance, the controller 180 of the mobile terminal checks a voltage applied to the ADC pin (ACC_ADC), thereby determining what kind of accessory has been connected.

That is, the voltage Vadc currently applied to the ADC pin is measured by the following Equation (1).

$$\text{Vadc} = 200k\Omega/(180k\Omega + 200k\Omega) \times 2.6V = 1.37V \qquad \text{Equation (1)}$$

Thus, the controller 180 confirms the currently connected accessory, namely, the connection of the cable 50, based upon the measured voltage Vadc. Typically, different types of accessories connected to the receptacle A of the mobile terminal have different resistances, so the controller 180 may check the voltage applied to the ADC pin (ACC_ADC) based upon the ID resistance of each accessory so as to confirm the type of accessory connected.

Afterwards, the controller 180 checks the short-circuited state of the data pins D+ and D-, to determine whether USB communication is currently available. Here, if the accessory having the cable-TA head structure is inserted in the mobile terminal, each data pin D+ and D- is coupled to the corresponding pin D+ and D-. Hence, if the pins D+ and D- of the receptacle A are not short-circuited, the controller 180 considers this state as a USB communication available state, and if short-circuited, the controller 180 considers the state as a specific charger being connected. Also, communications are not available in the short-circuited state and thus the corresponding routine is executed.

As such, when the accessory having the cable-TA head structure was inserted in the mobile terminal, such accessory connected to the mobile terminal was determined based upon the resistance of the ID pin of the plug A of the cable 50. However, since the ID pin is provided in the cable 50 other than in the TA 51, if the TA 51, more particularly, TA head is switched, there is no way to distinguish a TA header. As one example, if TA head is switched from 700mA type to 1A type, any method for distinguishing the 700mA type TA head from 1A type TA head has not been proposed.

Therefore, the present invention proposes a method, in which when various types of chargers are inserted in a mobile terminal via a cable, each type of charger used is precisely determined so as to allow more efficient and stable charging operation of the mobile terminal.

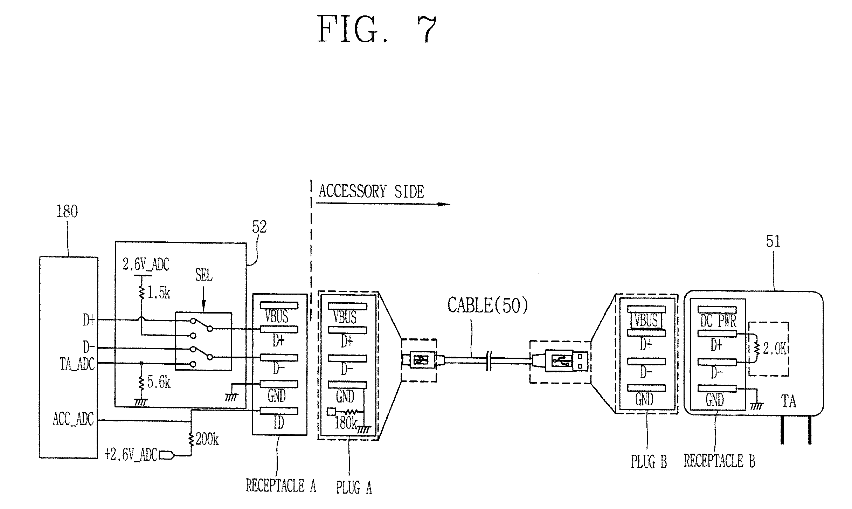

FIG. 7 is a view illustrating a charge structure of a mobile terminal for distinguishing a USB-based charger in accordance with an embodiment of the present invention.

As shown in FIG. 7, the charge structure of the mobile terminal according to the present invention for distinguishing a charger may be constructed by further providing a switching unit 52, which defines a current loop for determining a type of charger, to the charge structure of FIG. 6. Also, the controller 180 may be provided with a TA_ADC port for confirming a type of charger TA.

The switching unit 52 may be located between the controller 180 and the receptacle A, and include a first switch for switching the data pin D+ of the receptacle A to a power source terminal (2.6V_ADC) or to the data pin D+ of the controller 180 in response to a select signal SEL output from the controller 180, and a second switch for switching the data pin D- of the receptacle A to the data pin D- of the controller 180 or a voltage measure pin TA_ADC in response to the select signal SEL.

When the data pins of the TA 51 are not in the short-circuited state (i.e., in a normal state), the switching unit 52 may connect the data pins D+ and D- of the controller 180 to the data pins D+ and D- of the receptacle A responsive to the select signal SEL of the controller 180. Also, when the data pins of the TA 51 are in the short-circuited state, the switching unit 52 may connect the data pin D+ to the power source terminal 2.6V_ADC via 1.5kΩ and the data pin D- to a TA_ADC port of the controller 180 connected in parallel to 5.6kΩ resistance, in response to the select signal SEL, thereby forming a route for reading out a type of TA 51. The rest of the construction is the same as shown in FIG. 6, so a detailed description thereof will be omitted.

In order to control the operations of the switching unit 52, the controller 180 varies a select signal depending on the states of the data pins D+ and D- of the USB-based charger, namely, the TA 51. That is, upon insertion of the TA 51 via the cable 50 (i.e., upon generation of USB interruption), the controller 180 checks a USB resister to determine short-circuited states of the data pins D+ and D-. If it is checked that the data pins D+ and D- are not in the short-circuited state, the controller 180 outputs a select signal with a high level H. Also, if it is checked as the short-circuited state, the controller 180 outputs a select signal with a low level L.

Hence, in the short-circuited state of the data pins D+ and D- of the TA 51, since the TA_ADC port forms a closed loop (route) with the resistance within the TA 51 by the switching operation of the switching unit 52, the controller 180 can discriminate the type of charger, namely, the USB-based charger, connected to the mobile terminal according to the voltage level applied to the TA_ADC port.

Hereinafter, description will be made of an operation of the USB-based charger distinguishing device for the mobile terminal in accordance with the embodiment of the present invention.

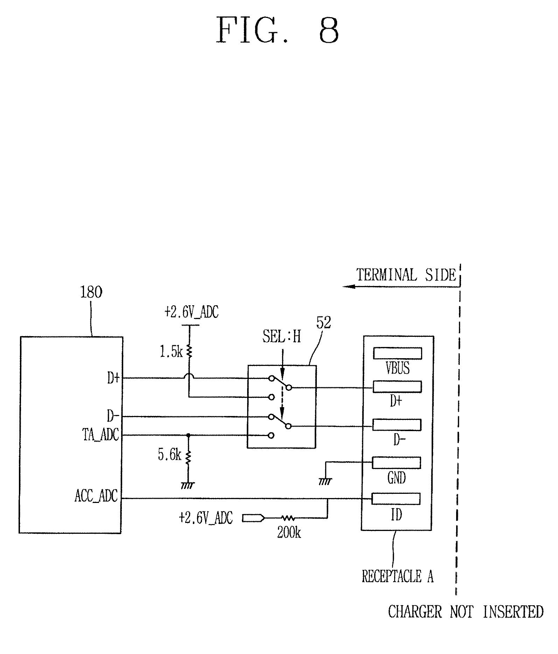

FIG. 8 illustrates the structure of the mobile terminal before the USB-based charger is inserted therein.

As shown in FIG. 8, in a non-coupled state between the receptacle A and the USB-based charger, namely, in a state of non-occurrence of USB interruption, the controller 180 outputs a select signal SEL with a high ("H") level. The switching unit 52 connects the data pins D+ and D- of the controller 180 and the data pins D+ and D- of the receptacle A, respectively, in response to the H level select signal SEL. Here, since the TA_ADC port of the controller 180 has been pulled down by resistance (5.6 kΩ), an input voltage of the TA_ADC port becomes 0V. Also, a supply voltage (2.6V_ADC) is floated via 1.5 kΩ, so no leakage current is present.

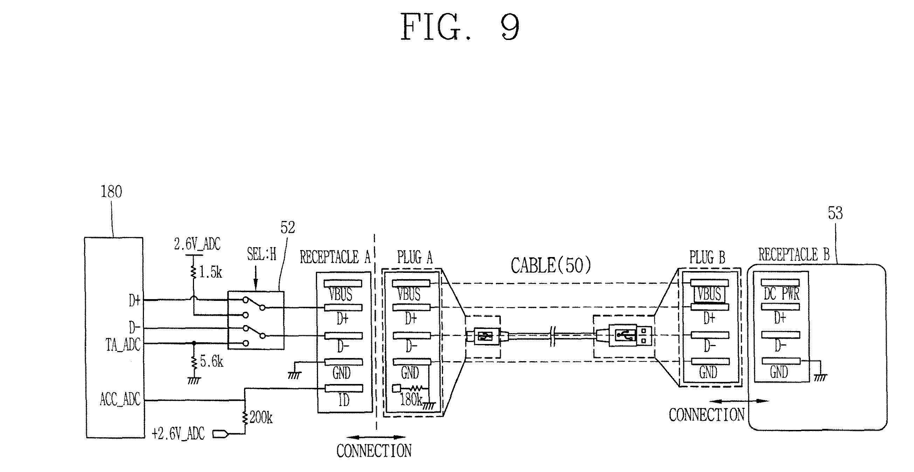

FIG. 9 illustrates a charging operation in case where an external device is inserted in the mobile terminal via a cable. The external device may be a computer, a USB host device, and the like.

As shown in FIG. 9, if an external device 53 is connected to the mobile terminal via the cable 50, the controller 180 checks the resistance of the ID pin of the plug A of the cable 50 via an ACC_ADC port. In more detail, a voltage applied to the ACC_ADC port is measured by use of Equation (1), so as to confirm an accessory, namely, the cable 50.

Upon confirming the type of accessory, the controller 180 checks a short-circuited state of the receptacle B of the currently connected external device 53, to determine whether a USB communication is available. If it is checked the data pins D+ and D- of the receptacle B are not in the short-circuited state, namely, if those pins are in an open state, the controller 180 considers it as a USB communication available state.

Hence, the controller 180 continuously outputs the H level select signal SEL to the switching unit 52, and also sets a charge current to 400mA so as to execute a charging operation.

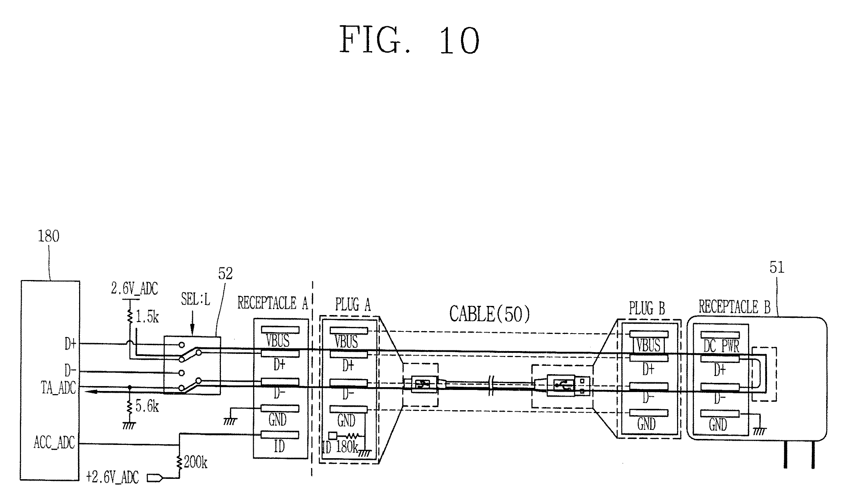

FIG. 10 illustrates a charging operation in case where a 700mA type charger is inserted into the mobile terminal via a cable.

If a particular charger 51 (i.e., 700mA type USB-based charger) is connected to the mobile terminal via the cable 50, the controller 180 checks the resistance of the ID pin of the plug A of the cable 50 via the ACC_ADC port and measures a voltage applied to the ACC_ADC port by use of Equation (1), thereby confirming the accessory, namely, the USB cable 50.

Upon confirming the type of accessory, the controller 180 checks a short-circuited state of the data pins D+ and D- of the receptacle B of the currently connected charger 51. If it is checked that the data pins D+ and D- of the receptacle B are in the short-circuited state, the controller 180 considers it as a specific charger being currently connected, so outputting a select signal SEL with a low ("L") level to the switching unit 52.

When the L level select signal SEL is input from the controller 180, the switching unit 52 executes a switching operation according to the select signal SEL such that the data pin D+ of the receptacle B is connected to the power source terminal 2.6V_ADC via 1.5 kΩ and the data pin D- is connected to a TA_ADC port of the controller 180, to which 5.6 kΩ resistance is connected in parallel.

Consequently, as represented with a bold arrow, a closed loop is defined as 2.6V_ADC→1.5 kΩ→700mA charger 51→TA_ADC. Hence, the controller 180 measures a voltage Vta_adc applied to the TA_ADC port according to the following Equation (2).

$$\text{Vta\_adc} = 5.6 \text{ k}\Omega/(1.5 \text{ k}\Omega + 5.6 \text{ k}\Omega) \times 2.6\text{V} = 2.05\text{V} \qquad \text{Equation (2)}$$

After measuring the voltage Vta_adc, the controller 180 determines whether the measured voltage is higher than 1.8V. As the check result, the voltage Vta_adc is currently 2.05V, which is higher than 1.8V. Therefore, the controller 180 decides that the charger 51 currently connected via the cable 50 is a 700mA type USB-based charger 51 and then sets a charge current to 600mA so as to execute a charging operation.

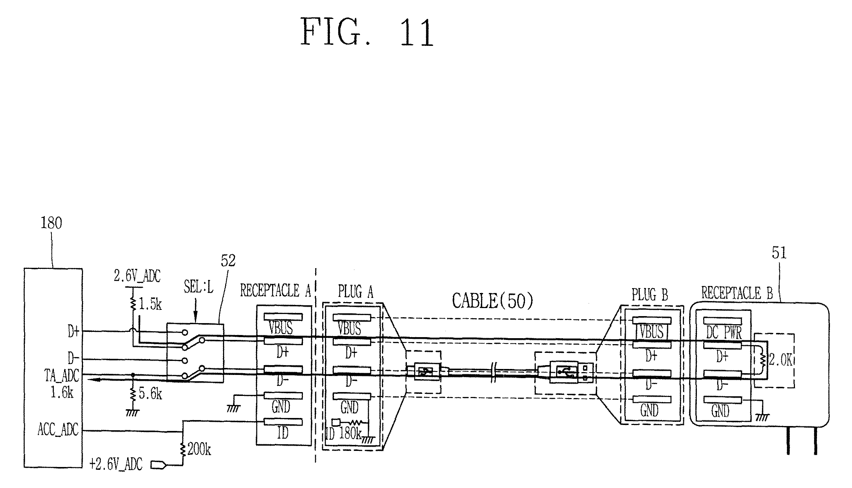

FIG. 11 illustrates a charging operation in case where a 1A type charger is inserted in the mobile terminal via the cable.

As shown in FIG. 11, if a particular charger 51 (i.e., 1A type USB-based charger) is connected to the mobile terminal via the cable 50, the controller 180 checks the resistance of the ID pin of the plug A of the cable 50 via the ACC_ADC port and measures a voltage applied to the ACC_ADC port according to Equation (1), thereby confirming the authenticated accessory, namely, the USB cable 50.

After confirming the type of accessory, the controller 180 checks a short-circuited state of the data pins D+ and D- of the receptacle B of the currently connected charger 51. The data pins D+ and D- of the receptacle B are checked to be in the short-circuited state, accordingly, the controller 180 considers it as the particular charger being currently connected so as to output an L level select signal SEL to the switching unit 52.

When the L level select signal SEL is input from the controller 180, the switching unit 52 executes a switching operation according to the select signal SEL such that the data pin D+ of the receptacle B is connected to the power source terminal 2.6V_ADC via 1.5 kΩ and the data pin D- is connected to the TA_ADC port of the controller 180, to which the 5.6 kΩ resistance is connected in parallel.

Consequently, as represented with a bold arrow, a closed loop is defined as 2.6V_ADC→1.5 kΩ→2.0 kΩ charger 51→TA_ADC. Hence, the controller 180 measures a voltage Vta_adc applied to the TA_ADC terminal on the closed loop according to the following Equation (3).

$$\text{Vta\_adc} = 5.6 \text{ k}\Omega/(1.5 \text{ k}\Omega + 5.6 \text{ k}\Omega + 2.0 \text{ k}\Omega) \times 2.6\text{V} = 1.6\text{V} \qquad \text{Equation (3)}$$

Upon measuring the voltage Vta_adc, the controller 180 checked whether the measured voltage is higher than 1.8V. As the check result, the voltage Vta_adc is currently 1.6V, which is lower than 1.8V. Therefore, the controller 180 decides that the charger 51 currently connected via the USB cable 50 is a 1A type USB-based charger 51 and then sets a charge current to 900mA so as to execute a charging operation.

As such, in accordance with the present invention, even when various types of USB-based chargers are inserted in the mobile terminal via the USB cable, the type of the corresponding charger is discriminated, which allows setting of an appropriate charge current, thereby ensuring a fast charging operation and minimizing damage on the USB-based charger.

Hereinafter, a method for discriminating a USB-based charger for the mobile terminal in accordance with an embodiment of the present invention will be described in more detail.

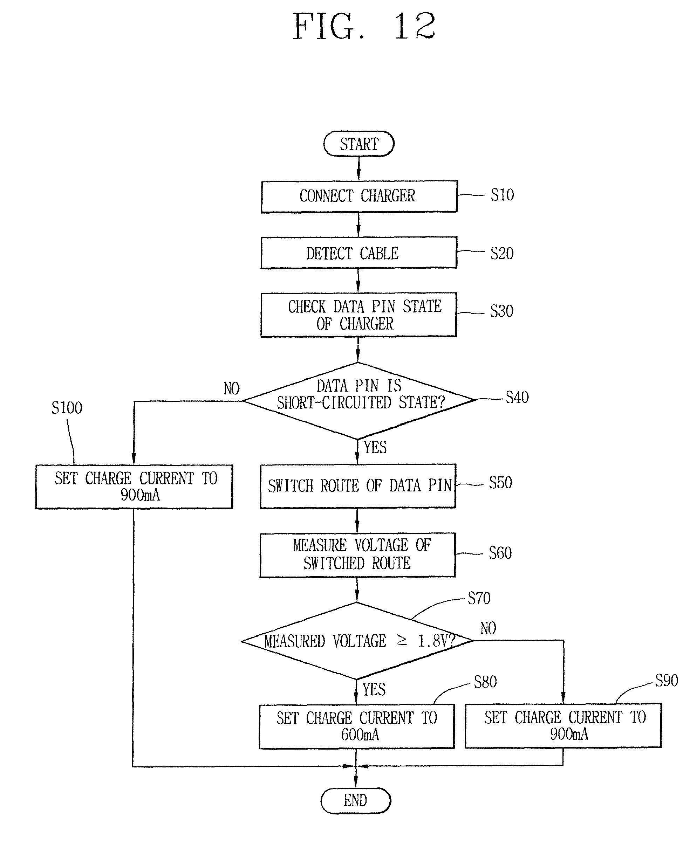

FIG. 12 is a flowchart showing a method for setting a charge current for a mobile terminal in accordance with an embodiment of the present invention.

As shown in FIG. 12, if a USB-based charger 51 is connected to a mobile terminal via a USB cable (S10), the controller 180 checks the resistance of the ID pin of the plug A of the USB cable 50 via the ACC_ADC port so as to confirm the type of accessory, namely, whether the USB cable 50 is an authenticated USB cable (S20). The process is performed to check whether an authenticated accessory, namely, an authenticated USB cable is used for the receptacle of the mobile terminal. For instance, if the resistance of ID pin of the USB cable 50 is 180 kΩ, it is determined as the authenticated accessory, and if not, a non-authenticated routine is separately performed.

Once the USB cable connected to the mobile terminal is confirmed, the controller 180 checks the short-circuited state of the data pins D+ and D- of the receptacle B of the USB-based charger 51, namely, TA head, inserted (connected) into the plug B of the USB cable 50 (S30 and S40). If it is checked the data pins D+ and D- of the receptacle B of the TA head are in the short-circuited sate, the controller 180 considers the current state as a specific charger being connected. Afterwards, the controller 180 outputs a L level select signal SEL so as to set a route for confirming the type of TA 51 by virtue of the switching operation of the switching unit 52 (S50). That is, as shown in FIGS. 10 and 11, a closed loop is defined as 2.6V_ADC→1.5 kΩ→USB-based charger 51→TA_ADC.

When the route for confirming the type of TA 51, the controller 180 measures a voltage applied to the TA_ADC port on the route according to Equation (2) or (3) (S60), and then checks whether the measured voltage is higher than 1.8V. If the measured voltage is higher than 1.8V, the controller 180 decides the current TA 51 connected to the plug B of the USB cable 50 as the 700mA type TA 51 and sets a charge current to 600mA.

On the other hand, if the measured voltage is lower than 1.8V, the controller 180 decides the current TA 51 connected to the plug B of the USB cable 50 as 1A type TA 51 and sets a charge current to 900mA.

Therefore, in addition to determining the type of accessory by checking the resistance of the ID pin of the USB cable connected to the mobile terminal as stated in the related art, the present invention is configured to check a voltage applied to a TA_ADC port of the mobile terminal when the USB-based charger is connected via the USB cable and confirm the type of the USB-based charger, thus to set an appropriate charge current.

As described above, according to the present invention, when various types of chargers are inserted in the mobile terminal via a cable, the type of a corresponding charger can be discriminated so as to set an appropriate charge current, resulting in ensuring a fast charging operation and minimizing damage on the charger.

Further, in accordance with one embodiment of the present invention, the method can be implemented as computer-readable codes in a program-recorded medium. The computer-readable medium may include all types of recording devices each storing data readable by a computer system. Examples of such computer-readable media may include ROM, RAM, CD-ROM, magnetic tape, floppy disk, optical data storage element and the like. Also, the computer-readable medium may also be implemented as a format of carrier wave (e.g., transmission via an Internet). The computer may include the controller 180 of the mobile terminal.

The configurations and methods of the mobile terminal in the aforesaid embodiments may not be limitedly applied, but such embodiments may be configured by a selective combination of all or part of the embodiments so as to implement many variations.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

**Claims**

1. A mobile terminal comprising:

   a receptacle configured to insert a charger therein;
   a controller configured to form a route defined by data pins of the receptacle and the charger when the charger is inserted in the receptacle via a cable, to determine a type of the charger based upon the route voltage and to set a charge current according to the determined type of the charger; and
   a switching unit configured to switch a connection between the data pins of the controller and the receptacle so as to form the route in response to a select signal of the controller.

2. The terminal of claim 1, wherein the charger is a Universal Serial Bus (USB)-based Travel Adaptor (TA) and the cable is a USB cable.

3. The terminal of claim 1, wherein the route is defined in form of a closed loop if the data pin of the charger is in a short-circuited state, while each of data pin is connected to remain in an open state if the data pin of the charger is not in the short-circuited state.

4. The terminal of claim 1, wherein the controller checks resistance of an ID pin of the cable to confirm whether the cable inserted in the receptacle is authenticated.

5. The terminal of claim 1, wherein the controller compares a voltage applied to the closed loop with a predetermined voltage value to determine a type of charger.

6. The terminal of claim 1, wherein the controller sets the charge current to 600mA if the charger is a 700mA type charger and sets the charge current to 900mA if the charger is a 1A type charger.

7. The terminal of claim 1, wherein the controller sets the charge current to 400mA if the data pin of the charger is in an open state.

8. The terminal of claim 1, wherein the switching unit comprises;
   a first switch configured to switch a first data pin of the receptacle to a power source terminal or a first data pin of the controller in response to a select signal of the controller; and
   a second switch configured to switch a second data pin of the receptacle to a second data pin of the controller or a voltage measure pin in response to the select signal.

9. The terminal of claim 1, wherein the first switch connects a first data pin of the receptacle to a power source terminal and the second switch connects a second data pin of the receptacle to a voltage measure pin when the data pin of the charger is in a short-circuited state.

10. A method for setting a charge current of a mobile terminal comprising:

    detecting an insertion of a charger via a cable;
    measuring a voltage of a route defined by a data pin of the mobile terminal and a data pin of the charger so as to determine a type of the inserted charger; and
    setting a charge current according to the determined type of charger.

11. The method of claim 10, wherein determining the type of charger comprises:

    checking a short-circuited state of the data pin of the charger;
    forming a route defined by a receptacle of a controller and the data pin of the charger if the data pin of the charger is in the short-circuited state;
    measuring a voltage of the formed route; and
    comparing the measured voltage with a predetermined reference value to determine the type of the charger.

12. The method of claim 10, wherein the charger is a Universal Serial Bus (USB) based Travel Adaptor (TA), and the cable is a USB cable.

**13.** The method of claim 10, further comprising checking resistance of an ID pin of the cable to confirm whether the cable inserted in the receptacle is authenticated.

**14.** The method of claim 10, wherein the charge current is set to 600mA if the charger is a 700mA type charger, to 900mA if the charger is a 1A type charger, and to 400mA if the data pin of the charger is in an open state.

**15.** The method of claim 10, wherein the route is defined in form of a closed loop if the data pin of the charger is in a short-circuited state and defined in an open form if not in the short-circuited state.

# FIG. 1

POWER SUPPLY UNIT — 190

100

110

WIRELESS COMMUNICATION UNIT

111 — BROADCAST RECEIVING MODULE

112 — MOBILE COMMUNICATION MODULE

113 — WIRELESS INTERNET MODULE

114 — SHORT-RANGE COMMUNICATION MODULE

115 — LOCATION INFORMATION MODULE

120 — A/V INPUT UNIT

121 — CAMERA

122 — MICROPHONE

130 — USER INPUT UNIT

140 — SENSING UNIT

141 — OUTPUT UNIT

180

CONTROLLER

MULTIMEDIA MODULE — 181

INTERFACE UNIT — 170

150

OUTPUT UNIT

DISPLAY UNIT — 151

AUDIO OUTPUT MODULE — 152

ALARM UNIT — 153

MEMORY — 160

# FIG. 2

# FIG. 3

# FIG. 4

# FIG. 5

100

51

CABLE(50)

TA

FIG. 6

TERMINAL SIDE     ACCESSORY SIDE

CABLE(50)

180 — CONTROLLER   D+   D-   ACC_ADC

2.6_ADC   200k

RECEPTACLE A: VBUS, D+, D-, GND, ID

PLUG A: VBUS, D+, D-, GND, 180k

PLUG B: VBUS, D+, D-, GND

RECEPTACLE B: DC PWR, D+, D-, GND   SHORT   TA

51

# FIG. 7

ACCESSORY SIDE →

180

52

2.6V_ADC
1.5k
SEL

D+
D−
TA_ADC

5.6k

ACC_ADC

+2.6V_ADC
200k

**RECEPTACLE A** — VBUS, D+, D−, GND, ID

**PLUG A** — VBUS, D+, D−, GND, 180k

CABLE(50)

**PLUG B** — VBUS, D+, D−, GND

51

**RECEPTACLE B** — DC PWR, D+, D−, GND

2.0K

TA

# FIG. 8

# FIG. 9

# FIG. 10

# FIG. 11

# FIG. 12

```
                    ┌─────────┐
                    │  START  │
                    └─────────┘
                         │
                         ▼
            ┌───────────────────────┐
            │    CONNECT CHARGER     │——— S10
            └───────────────────────┘
                         │
                         ▼
            ┌───────────────────────┐
            │     DETECT CABLE       │——— S20
            └───────────────────────┘
                         │
                         ▼
            ┌───────────────────────┐
            │  CHECK DATA PIN STATE  │——— S30
            │      OF CHARGER        │
            └───────────────────────┘
                         │
                         ▼
         NO         ╱─────────────╲
    ◄──────────────╱   DATA PIN IS  ╲——— S40
    │              ╲ SHORT-CIRCUITED ╱
    │               ╲   STATE?     ╱
S100│                ╲───────────╱
    │                     │ YES
    ▼                     ▼
┌──────────────┐   ┌───────────────────────┐
│ SET CHARGE   │   │ SWITCH ROUTE OF DATA PIN │——— S50
│ CURRENT TO   │   └───────────────────────┘
│   900mA      │            │
└──────────────┘            ▼
    │              ┌───────────────────────┐
    │              │   MEASURE VOLTAGE OF   │——— S60
    │              │    SWITCHED ROUTE      │
    │              └───────────────────────┘
    │                       │            S70
    │                       ▼
    │              ╱─────────────────╲        NO
    │             ╱ MEASURED VOLTAGE   ╲──────────────┐
    │             ╲    ≥ 1.8V?         ╱              │
    │              ╲─────────────────╱               │
    │                   │ YES    S80                  │ S90
    │                   ▼                             ▼
    │          ┌──────────────────┐      ┌──────────────────┐
    │          │ SET CHARGE CURRENT│     │ SET CHARGE CURRENT│
    │          │   TO 600mA        │     │   TO 900mA        │
    │          └──────────────────┘      └──────────────────┘
    │                   │                          │
    └───────────────────┼──────────────────────────┘
                        ▼
                   ┌─────────┐
                   │   END   │
                   └─────────┘
```